# EUROPEAN PATENT APPLICATION

(11) **EP 2 334 005 A1**
(43) Date of publication of application: **15.06.2011**
(21) Application number: 09178878.6
(22) Date of filing: 11.12.2009
(51) Int. Cl.: H04L 9/00

(54) **Integrated circuit and method of producing same**

(71) Applicant: NXP B.V., 5656 AG Eindhoven (NL)
(72) Inventor: Graeber, Frank, 5656 AE, Eindhoven (NL); Meyn, Hauke, 5656 AE, Eindhoven (NL); Schuetz, Antje, 5656 AE, Eindhoven (NL)
(74) Representative: Krott, Michel

(57) **Abstract**

Integrated circuit 100 and a method of producing the integrated circuit is provided. The method of producing an integrated circuit 100 comprises receiving an encrypted data block and manufacturing the integrated circuit comprising a memory 130 storing the encrypted data block, a key storage 160 configured for receiving and storing a decryption key in an empty storage part 162 of the key storage, and a decryption module 120 configured for decrypting at least part of the encrypted data block stored in the manufactured memory using the decryption key once the decryption key has been stored in the key storage. It is avoided that the manufacturer of the integrated circuit needs to have access to the plain unencrypted data block or to a corresponding decryption key. The integrated circuit is suitable for use in a smart card.

## Description

### FIELD OF THE INVENTION

The invention relates to a method of producing an integrated circuit comprising receiving a data block and manufacturing the integrated circuit, the manufactured integrated circuit comprising a memory storing the data block. The invention further relates to integrated circuits produced according to the method.

### BACKGROUND OF THE INVENTION

Integrated circuits are often at the heart of commercial application connected with large financial interest. The integrated circuit comprises confidential, proprietary information such as cryptographic keys, executable computer code, etc, stored in a memory of the integrated circuit. Examples include, banking applications wherein the integrated circuit is responsible for the authentication of money transfers and content distribution systems wherein the integrated circuit is responsible for restricting access to the content to subscribers to the distribution systems.

For example, content distribution may be done over a network comprising multiple set-top boxes. In each set-top box an integrated circuit, typically integrated in a smart card, comprises secret cryptographic keys and/or secret decrypting algorithms for decrypting content, e.g. music, movies, etc, and/or decrypting further cryptographic keys. Further cryptographic keys may include for example so-called Control Words (CW), Entitlement Control Messages (ECM) and Entitlement Management Messages (EMM). Further cryptographic keys may be used for increased security and regional control.

Naturally, secret keys must be kept confidential, since their exposure may lead to unauthorized access, unauthorized transactions, etc. However, it may also be desirable to keep executable computer code which may be present on an integrated circuit confidential. The executable computer code may include secret encryption and/or decryption algorithms but also other code such as operating system code, code to control the integrated circuit, etc.

Persons who try to manipulate integrated circuits, in particular smart cards, or use information contained thereon in an illegal and/or unauthorized manner will be referred to as 'attackers'. An attacker may receive an integrated circuit in the form of a smart card containing a memory, e.g., a Read-Only-Memory (ROM), e.g., in the field through the regular channel. For example, an attacker may receive a smart card as part of a regular content subscription for use in a set-top box, or they may receive a smart card containing a ROM as a regular customer of a bank intended for regular banking smart-card transactions.

Although computer code, like cryptographic algorithms, are typically designed to be robust and secure even in when there content is revealed, in practice it may be wise to make an effort to keep these assets secret. From the moment, a cryptographic algorithm such as an encryption, decryption, signing, verifying algorithm, etc, or computer code such as operating system code, device drivers, application code, access algorithms etc, are known to attackers they can start screening the algorithm or code for weaknesses. Cryptographic algorithms may allow cryptographic attacks which were not anticipated by the designer of the algorithms. Software code may comprise faults, also known as 'bugs', which can be exploited in order to obtain rights elevation. For example, once software code is available it can be screened for so called 'buffer overflow' problems. A 'buffer overflow' problem arises when a temporary buffer is allocated with a smaller size than it is used. As a result, an attacker can use such a software fault to overwrite parts of the memory. Although programmers typically strive to avoid programming faults, such as buffer overflows, they are nevertheless known to happen.

One way to protect a memory against unauthorized reading of its contents is to encrypt its contents. The decryption key may be stored on the integrated circuit. Since a decryption key is generally smaller, i.e., contains fewer bits, than the memory's content it is easier to store it securely on the integrated circuit.

A known method to produce integrated circuits is published as US patent application with number US2003/0154384 and title "Method and arrangement for the manufacture of mask-programmed ROMs while utilizing a mask comprising a plurality of systems, as well as a corresponding computer program product and a corresponding computer-readable storage medium".

The known method relates to the manufacture of mask-programmed Read-Only-Memories (ROMs) while utilizing a mask. In order to provide protection against unauthorized reading, encryption of addresses and data is carried out in smart card controllers (SCC) for all types of memory (RAM, non-volatile memory, ROM). This protects the memory contents against unauthorized reading out by an unauthorized person, the discovery of secret information or abusive code manipulations. The key are contained in ROM fuses. The encryption is advantageously carried out for addresses and/or data.

Depending on the chip size, a plurality of systems may be simultaneously present on a physical mask which is used during the production process of smart card controllers. All systems on the physical ROM mask may contain the same ROM code and the same key. A customary method is to keep the codes or keys in ROM fuses (special ROM cells). Different keys can thus be realized for each ROM code. All devices with one ROM code may have the same key.

The known systems describes that also an individual key may be calculated for each individual system during the manufacture of the ROM mask, products are obtained for which different keys exist despite the same (logic) ROM code.

Encryption of ROMs makes it harder for some parties to obtain access to the contents of the ROM. For example, attackers who obtain a smart card in the field through the regular channels will not only have to find to way to obtain access to content stored in a memory of the ROM they also need to obtain access to a decryption key which may be used to decrypt the stored content. Even if that decryption key is stored on the smart card this may be an additional burden.

On the other hand, the known production method does not protect the content of memories which are stored in integrated circuits during the manufacture of the integrated circuit from the manufacturer himself. In the known method, the manufacturer receives a data block intended for a memory and encrypts it himself. The encryption key is then stored on the integrated circuit in the form of ROM fuses. Accordingly, in the unhoped for situation wherein an employee of the manufacturer is corrupt, an unencrypted copy of the data block may leak.

Given the ever increasing financial interests connected with the security of integrated circuits in particular smart card customers of integrated circuit manufacturers are increasingly unhappy in the amount of trust they need to place in the integrated circuit manufacturer.

### SUMMARY OF THE INVENTION

It is an object of the invention to improve confidentiality of data blocks stored in memories during their manufacture.

The method producing an integrated circuit comprises receiving a data block and manufacturing the integrated circuit. The manufactured integrated circuit comprises a memory storing the data block. The received data block is an encrypted data block.
The integrated circuit comprises a key storage configured for receiving and storing a decryption key in an empty storage part of the key storage, and a decryption module configured for decrypting at least part of the encrypted data block stored in the manufactured memory using the decryption key once the decryption key has been stored in the key storage.

The manufacturer of the integrated circuit receives the data block in encrypted form. The manufacturer remains able to manufacture a memory comprising the data block, but only in encrypted form. The manufacturer does not receive the decryption key needed for decrypting the encrypted data block. A customer ordering the manufacture and who provides the encrypted data block can be assured that the manufacturer is not able to read the unencrypted data block, since the manufacturer does not have access to the data block in unencrypted form and neither can he produce it by decrypted the encrypted data block since he does not have the corresponding decryption key. After the integrated circuit has been produced by the manufacturer, for which manufacturing he can use any of the known manufacturing methods for manufacturing memories with a predetermined content, the content of the memory cannot yet be used since it is as yet in an unintelligible form.

However, the manufacturer installs means in the integrated circuit which can later be used to make the data block accessible. To this end the manufacturer includes on the integrated circuit a key storage in which a key can later be installed after the manufacturing of the physical integrated circuit. The manufacturer has some freedom in making the key storage, for example, the key storage may be configured to store only a single key, or multiple keys. For example, one or more keys may be pre-installed in the key storage. However, at least one part of the key storage is empty, so that later a decryption key can be installed in it by a party different than the IC manufacturer. The manufacturer also includes on the integrated circuit a decryption module. The decryption module is configured for a decryption algorithm that corresponds to the encryption algorithm that was used for encrypting the data block. The decryption module is configured to use a decryption key stored in the key storage. However, just after the manufacturing the decryption module is not yet able to decrypt the encrypted data block stored in the manufactured memory, since the decryption module does not have access to the decryption key yet.

A result of this way of manufacturing is that the manufacturer never needs to have access to the plain, i.e. unencrypted, data block, nor does he need to have the decryption key with which the encrypted data block may be decrypted. The confidentiality of the data block is increased since there is one party less that needs to have access. Using the invention is possible to avoid giving the chip manufacturer plain access to the data block. The memory will also be referred to as the data memory.

After the manufacturing is finished the manufactured integrated circuit can be delivered to the ordering customer, or to some other party different from the manufacturer, e.g., for personalizing of the integrated circuit, e.g. card. The other party may then load the decryption key into the empty part of the key storage. The loading of the decryption key comes after the manufacturing of the physical integrated circuit is finished. Loading of the decryption key comprises causing the key storage to receive and store the decryption key.

During personalizing other data may be loaded onto the integrated circuit, e.g., card. The other data may comprise, for example, data identifying a user, secret keys, pin codes, configuration data, further executable computer code, etc. Personalizing may also comprise configuring the integrated circuit.

An integrated circuit may be any suitable miniaturized electronic circuit comprising semiconductor devices possibly also including passive components. An integrated circuit may be manufactured in the surface of a thin substrate of semiconductor material. Integrated circuits may use semiconductors, e.g., those produced using the CMOS technology. The manufacture of an integrated circuit typically uses optical lithography. A photo mask is produced representing the integrated circuit. During the manufacturing of the integrated circuit, light may shone through the photo mask to transfer the design of the integrated circuit to the substrate.

A person skilled in the art is familiar with the general concept of manufacturing an integrated circuit, and in particular with creating a mask that represents an integrated circuit design.

The encrypted data block may be received by the manufacturer in any suitable form. For example, the manufacturer may receive the data block as a binary file, e.g., as a ROM code. The binary file represents the content that the customer wishes to have in a memory of the integrated circuit. After receiving the encrypted data block the manufacturer creates a design representing the physical integrated circuit. The design is suitable to manufacture the IC from, e.g., by first creating a photo mask from the design. A first part of the design represents a memory which stores the encrypted data block. A second part of the design represents a key storage. A third part of the design represents the decryption module. The design may be transferred to a substrate, that is, an integrated circuit according to the design may be then manufactured using any integrated circuit manufacturing technique.

The memory that is manufactured on the integrated circuit has a predetermined content. Typically, the memory is a Read-Only-Memory, of which the content is predetermined and fixed. This condition is not necessary though, a memory with a predetermined content, yet which may later be overwritten can also be used.

The data block can be encrypted with any cryptographic encryption algorithm. Both symmetric and asymmetric encryption may be used. The decryption module is configured for decrypting with a decryption algorithm that corresponds to the encryption algorithm. International Patent Application with publication number WO 03/030441 and title "MEMORY ENCRYPTION SYSTEM AND METHOD" comprises memory encryption and decryption techniques which may be employed. In particular, the described encryptor 20 may be used for encrypting a memory, e.g., on the premises of an ordering customer. The described decryptor 40 may be used to decrypt a memory, e.g., in a decryption module.

The key storage may comprise memory. Preferably, the key storage is a secure memory which resists unauthorized readings. For example, the gates of the key storage may be distributed across the integrated circuit in order to hide it from attackers.

It is an advantage to have the decryption module in hardware manufactured into the integrated circuit. A hardware decryption module processes faster and uses less power. Moreover, a hardware decryption module allows so-called just-in-time decryption wherein a data item of the data block is decrypted only when it is requested. In this way the encryption employed in the memory can be fully transparent to users of the memory.

The data block may comprise a card operating system (COS) and may be converted to a photo mask for integrated circuit (IC) production. If the COS were not encrypted then the smart card IC manufacturer would learn this secret from, e.g., the COS vendor. From a security perspective this would be a disadvantage. Additional people have to be trusted with this secret, namely those involved in the COS submission and photo mask creation process. From a security point of view it is advisable to reduce the number of people who need access to a secret.

The COS may be delivered as a binary executable code obtained from compiling a plain source code text. Nevertheless, a binary executable code which is not otherwise encrypted is not considered an encrypted form as in the invention. In this example, the decryption module would be configured to obtain the binary executable code from the encrypted data block stored in the memory, not the source code. Moreover, compilation is not encryption since one may easily obtain the source code from a binary executable code, for example, by using a disassembler.

In an embodiment, manufacturing the integrated circuit comprises obtaining a photo mask representing the integrated circuit, the manufacturing using the photo mask to manufacture the integrated circuit.

The photo mask may be produced by conventional photo mask creation tools. In an embodiment, the obtaining a photo mask representing the integrated circuit comprises obtaining a binary design format representing using planar geometric shapes the integrated circuit. The obtaining of the photo mask uses the binary design format to obtain the photo mask. It is an advantage to use a binary format as an intermediary between high level descriptions of the integrated circuit and the photo mask which may be needed for the actual physical manufacturing. An example of a binary design format is GDS II. The planar geometric shapes are represented in the planar geometric shapes in an encoding, e.g., using coordinates.

In an embodiment, obtaining the binary design format comprises obtaining a first binary design format representing the memory storing the encrypted data block, obtaining a second binary design format representing the key storage and the decryption module.

Typically, the desired content of the memory comes from a different party as the design of the integrated circuit. The design of the integrated circuit, comprising e.g. the decryption module and the key storage, can be integrated with a design of the memory. Obtaining a binary design format representing, e.g., using planar geometric shapes the integrated circuit, may comprise combining the first and second binary design format into a single format.

In an embodiment, the encrypted data block comprises multiple encrypted data items. The decryption module comprises a data decryptor configured for decrypting an encrypted data item.

Encrypting data items has the advantage that their content is obscured.

For example, the encrypted data items may be encrypted with an encryption algorithms and decrypting comprises running the corresponding decryption algorithms on the encrypted data item. Suitable encryption algorithms include symmetric algorithms, for example, block ciphers and stream ciphers. For example, the data decryptor may comprise a block cipher decryption block, running in Electronic codebook (ECB). Examples of block ciphers include, AES, DES, TEA, etc. The block cipher may have a block size which is equal to the size of an encrypted data item and decrypted data item. For example, a data item may have a size of 64 bits, and the DES block cipher may be used, which also has a block size of 64 bits. Other common bit sizes for data items include 8, 16 and 32 bits, for which block ciphers having block size of 8, 16 and 32 respectively may be used. Alternatively, multiple smaller data items can be combined in a larger data item so ease encryption. For example, 4 smaller data items of 8 bits may be combined in a single data item of 32 which may be encrypted using a 32 bit block cipher. On the other hand larger data item can split into smaller data item which can be separately encrypted. One way to produce block ciphers having a desired block size is to use a Feistel design. For example, a known Feistel block cipher, e.g., DES or TEA, may be modified to use a smaller block size by discarding part of its round function. The unencrypted data size may be smaller than the size of an encrypted data item. The latter may, e.g., occur if a block cipher is used with a larger block size than the unencrypted data block.

Data may also be encrypted with a stream cipher. A stream cipher is a symmetric key cipher wherein plaintext data items are combined with a pseudorandom cipher stream, also known as the key-stream. The combining is typically done by an exclusive-or (XOR) operation. Another possible combining operation is arithmetical addition.

The data encryption may depend both on the data item itself and the address under which it is accessible. The address may be a plain address some derivative of the plain address, e.g., an encrypted address or a hash of the address. For example, a data item may be encrypted by XOR-ing it with a block cipher encryption of the address where it is stored. This type of encryption is known as counter mode encryption.

In an embodiment, the encrypted data block comprises multiple data items associated with respective encrypted addresses, the memory being arranged to store the data items at the encrypted addresses, the decryption module comprising an address encryptor for encrypting a plain memory address to obtain an encrypted address.

Encrypting addresses has the advantage that the order of the data items is obscured. Even if the data items themselves were not encrypted the obfuscating arrangement after address encryption makes the correct interpretation of the data items difficult. Note that address encryption may be used both with and without data encryption.

The address encryptor may use similar algorithms as the data encryptor. In particular a symmetric algorithm such as a block cipher may be used.

Encrypting addresses has the further advantage that the addresses can be encrypted before they are needed. Often the needed addresses can be predicted before they are needed. For example, execution of program code progresses in a linear fashion most of the time. Hence the addresses for which an encryption will be needed in the near future can be computed in advance, possibly using a pipeline architecture.

In an embodiment, the integrated circuit comprises a bus for receiving in the memory requests for a data item from a plain address, wherein the address encryptor is arranged for encrypting the plain memory address to obtain the encrypted address, and wherein the data decryptor is arranged to decrypt the encrypted data item stored in the memory at the encrypted address.

This configuration makes the encryption used in the memory transparent to a user of the memory, e.g., a processing unit. The processing unit can request data from plain addresses and receive unencrypted data. That is the user of the memory cannot tell that the memory is encrypted, as it seems to him that he has access to an unencrypted plain memory. This simplifies the configuration considerably, e.g. the programming of the integrated circuit.

In an embodiment, the encrypted data block comprises encrypted executable code and wherein the integrated circuit comprises a processing unit for executing at least part of the executable code.

The executable code can be executed as if it were ordinary unencrypted code, yet at the same time it is encrypted and never available to the manufacturer. The encrypted executable code may be decrypted just-in-time, that is, just before it is needed. Alternatively, a batch of memory may be decrypted to a temporary storage and used, after which a next batch of memory is decrypted. Just-in-time decryption makes the decryption of the memory transparent to the user.

In embodiment, the data decryptor comprises an override mode wherein the data decryptor is configured to suppress the decrypting of data items allowing access to the encrypted data block in the manufactured memory.

The manufacturer of the integrated circuit may wish to test the integrated circuit before it is delivered to the ordering customer. However, the manufacturer does not have the decryption key. Accordingly, he cannot use the regular access method via the key storage and decryption module. In order that he may at least test if the memory is operative and if the data is stored in it, the decryption module provides an override mode which disables all or part of the decryption functionality. This allows the manufacturer to test the memory. Note that the manufacturer is not able if, e.g., executable code stored in the memory works as intended since this requires the correct decryption key. He can test if the memory is accessible, and if it contains data. He may even check that the memory contains the correct encrypted data.

The integrated circuit provides an interface enabling the receiving and storing of a decryption key in an empty storage. This allows the ordering customer to inject the decryption key into the empty storage.

In an embodiment, this interface may be disabled by the ordering customer once the decryption key had been stored in the key storage. This process may be an irreversible, e.g., a one time only procedure.

In an embodiment, the decryption module provides an override mode which disables all or part of the decryption functionality as long as the key storage is empty meaning that the decryption key had not been personalized.

In an embodiment, the memory stores a predetermined test pattern, testing the integrated circuit comprises reading the stored test pattern from the memory in override mode and comparing the read test pattern with the predetermined test pattern. By comparing the predetermined test pattern with the pattern stored in the memory, the manufacturer has assurance that the memory is working as specified.

In an embodiment, the address encryptor comprises an override mode wherein the address encryptor is configured to suppress the encrypting of plain memory addresses allowing access to the manufactured memory using plain memory addresses. In this way the working of an address decoder which may be present on the integrated circuit can be tested without interference of the address encryption.

In an embodiment, the integrated circuit comprises executable code for testing the integrated circuit, at least part of the test code being configured to configure the address encryptor and/or data decryptor into override mode.

In an embodiment, the executable code stored in the test memory is stored in encrypted form, and wherein the decryption module is further configured for decrypting at least part of executable code stored in the test memory.

In an embodiment, the memory is a read only memory. A read only memory can be produced with predetermined contents with a mask. A ROM with such a predetermined content, i.e. the encrypted data block, is a cost-efficient way to provide the integrated circuit with the encrypted data block.

A further aspect of the invention concerns an integrated circuit comprising a read-only-memory storing a data block, wherein the data block is an encrypted data block, the integrated circuit comprises a key storage configured for receiving and storing a decryption key in an empty storage part of the key storage, and a decryption module configured for decrypting at least part of the encrypted data block stored in the manufactured memory using the decryption key once the decryption key has been stored in the key storage.

A further aspect of the invention concerns an integrated circuit manufactured according to the invention.

An integrated circuit according to the invention may be used in a smart card or an RFID tag. Smart cards according to the invention may be used in set-top boxes, mobile phones, access systems, etc. An RFID tag may be used for product identification and/or tracking, etc.

An integrated circuit and a method of producing the integrated circuit is provided. The method of producing an integrated circuit comprises receiving an encrypted data block and manufacturing the integrated circuit comprising a memory storing the encrypted data block, a key storage configured for receiving and storing a decryption key in an empty storage part of the key storage, and a decryption module configured for decrypting at least part of the encrypted data block stored in the manufactured memory using the decryption key once the decryption key has been stored in the key storage. It is avoided that the manufacturer of the integrated circuit needs to have access to the plain unencrypted data block or to a decryption key corresponding to the encrypted data block. The integrated circuit is suitable for use in a smart card.

### BRIEF DESCRIPTION OF THE DRAWINGS

The invention is explained in further detail by way of example and with reference to the accompanying drawings, wherein:
Figure 1 is a block diagram illustrating a manufactured integrated circuit.
Figure 2a is a block diagram illustrating a detail of the manufactured integrated circuit,
Figure 2b is a block diagram illustrating a further detail of the manufactured integrated circuit,
Figure 3a shows a schematic top-view of a smart card,
Figure 3b is a block diagram illustrating an integrated circuit,
Figure 4 is a flow chart illustrating a method according to the invention.

Throughout the Figures, similar or corresponding features are indicated by same reference numerals.

List of Reference Numerals:
- 100: an integrated circuit
- 120: a decryption module
- 130: a data memory
- 135: a data memory connection
- 140: a test memory
- 145: a test memory connection
- 150: a processing unit
- 155: a processing unit connection
- 160: a key storage
- 162: an empty part
- 164: a stored key
- 170: a logic part
- 175: An integrated circuit interface
- 232: an encrypted address connection
- 234: an encrypted data connection
- 252: a plain address connection
- 254: a plain data connection
- 222: an address encryptor
- 224: a data decryptor
- 226: an additional address connection
- 300: a smart card
- 310: an integrated circuit
- 305: a supporting card
- 320: a processing unit
- 322: a memory
- 324: a decryption module and key storage
- 326: a communication element
- 330: a bus
- 500: a flow chart
- 510: encrypting a ROM code using an encryption key
- 520: converting the encrypted ROM code into a GDSII binary file
- 525: Integrated circuit manufacturer domain
- 530: creating the photo mask from the GDSII binary file
- 540: manufacturing the physical integrated circuit using the photo mask
- 550: personalizing the integrated circuit
- 560: issuing the card
- 580: generating an encryption key

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

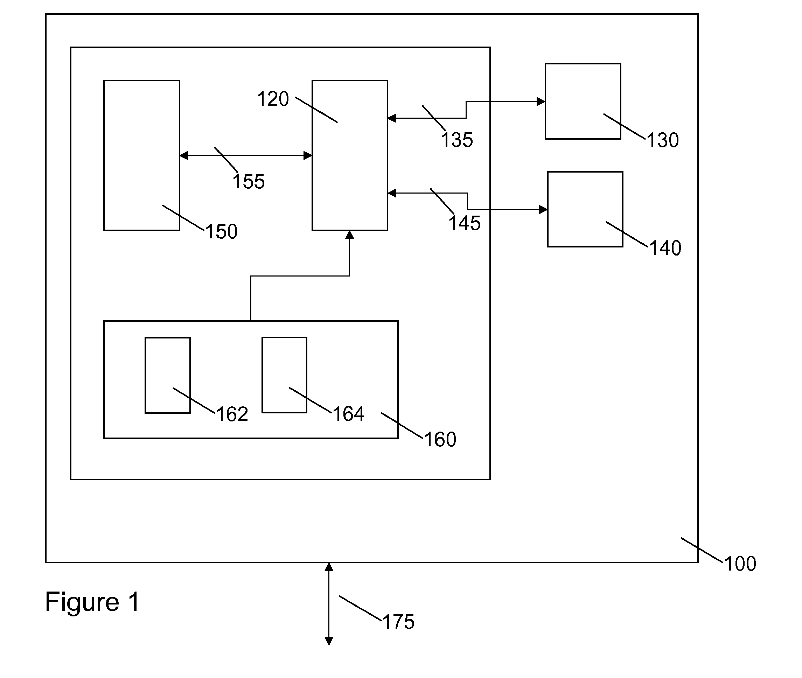

Figure 1 illustrates an integrated circuit 100 such as may be produced by a method according to the invention.

Integrated circuit 100 comprises a data memory 130. Data memory 130 stores a predetermined encrypted data block. The encrypted data block has been delivered to the manufacturer from a different party, e.g., a customer. The encrypted data block may comprise digital data representing, computer code, configuration data, cryptographic keys, etc.

Integrated circuit 100 comprises a decryption module 120. Decryption module 120 is configured for a decryption algorithm which corresponds to the encryption algorithm used to encrypt the encrypted data block stored in data memory 130. Data memory 130 is connected to decryption module 120 via a data memory connection 135.

Integrated circuit 100 comprises an interface 175 configured for receiving a decryption key. Interface 175 may comprise contact pads. Interface 175 may comprise an antenna for wireless receiving.

Integrated circuit 100 comprises a key storage 160 for storing a decryption key which may be used by decryption module 120. Key storage 160 comprises an empty part 162. Key storage 160 is configured storing the received decryption key in empty part 162. Communication between integrated circuit 100 and a computing device outside of integrated circuit 100 may be wireless or, e.g., may make use of connection pads (neither shown). Key storage 160 may also store one or more keys which are stored during manufacturing, e.g. a stored key 164. Stored key 164 was not used in the encryption of the data block stored in data memory 130.

Key storage 160 may store the secret key in designated EEPROM cells, which are optimized regarding security. For example, non-volatile, one-time-programmable (OTP) memory may be used for empty part 162 possibly within the glue-logic of the design.

Integrated circuit 100 optionally comprises a processing unit 150 for executing code stored in encrypted form in data memory 130.

Integrated circuit 100 optionally comprises a test memory 140. Test memory 140 comprises code executable by processing unit 150 to test integrated circuit 100. Data memory 130 and test memory 140 are typically a read only memory (ROM) and can be produced with a ROM mask. Decryption module 120 is connected to test memory 140 via an optional test memory connection 145. Data memory 130 and test memory 140 may be integrated in a single memory.

The content of test memory 140 may be stored in encrypted form using address and/or data encryption as could also be used for data memory 130. Encrypted content of test memory 140 may be decrypted by decryption module 120 as well. The decryption key for decryption 140 may be stored in key storage 160. A difference between data memory 130 and test memory 140 is that the decryption key needed for test memory 140 may be stored in integrated circuit 100 during manufacture, for example as part of the mask. For example, decryption module 120 could use stored key 164 to decrypt test memory 140. The key for decrypt test memory 140 can also be injected into after manufacturing the physical integrated circuit, e.g., during a test phase coming before a personalization phase. Receiving and storing of a key for use during a test phase for decrypting a test memory can use the same mechanism as for data memory 130.

Data memory connection 135 and test memory connection 145 are configured to transport a request for a data item from decryption module 120 to data memory 130 and test memory 140 respectively, and to transport a corresponding data item from data memory 130 and test memory 140 respectively back to decryption module 120. Connections 135, 145 and 155 may use a bus.

Optionally, decryption module 120 may be configured with one or more override modes. In an override mode, decryption module 120 bypasses its address encryptor and/or data decryptor. For example, processing unit 150 may configure decryption module 120 to behave differently for different address ranges. For example processing unit 150 can configure decryption module 120 to use the key stored in empty part 162 for addresses corresponding to data memory 130 (once that key is loaded), to use the key stored in stored key 164 for addresses corresponding to test memory 140. Processing unit 150 may also configure processing unit 150 not to use data decryption and/or address encryption for certain address ranges. Decryption module 120 may be integrated with a memory manager to facilitate this. In particular processing unit 150 may configure decryption module 120 not to use data decryption and/or address encryption for data memory 130. Decryption module 120 may be integrated into processing unit 150. This has the advantage that the connections between processing unit 150 and memories 130 and 140 are encrypted.

Processing unit 150 is connected to decryption module 120 via an optional processing unit connection 155. Processing unit connection 155 is configured to transport a request for a data item from processing unit 150 to decryption module 120, and to transport a corresponding data item from decryption module 120 respectively back to processing unit 150. For example, processing unit 150 can be a CPU, e.g., an 8051 processor.

To increase security the function block which decrypts the encrypted data block may be implemented in so-called glue-logic to hamper potential signal probing. Part of the logic of integrated circuit 100, but at least key storage 160 and decryption module 120 are comprised in logic part 170. Processing unit 150 is preferably also comprised in logic 170. Data memory 130 and test memory 140 are preferably not comprised in logic 170. The gates which make up logic 170 are distributed across an area of integrated circuit 100 in a random manner, using so-called, glue-logic. The use of logic 170 and glue logic is optional. It has been found that large structures such as memories do not lend themselves well to random distribution across an area of an integrated circuit. However, logic elements, such as those in logic 170 are suited to random distribution across an area of integrated circuit 100. The advantage is that logic 170 implemented as glue logic is hard to reverse engineer and hard to eavesdrop on.

Decryption module 120 is preferably implemented in hardware of the integrated circuit as defined e.g., by a photo mask. However, it is also possible to implement part or all of decryption module 120 as a general purpose processor connected to a memory for executable code, e.g., firmware. The decryption module may be configured to receive and store the executable code, e.g., during a phase after manufacture, such as during a test or personalization phase. The executable code may implement the decryption algorithms, e.g., the data decryptor and/or the address encryptor. Providing the functionality of decryption module 120 after manufacture has the advantage that the details of the decryption algorithms can be hidden from the integrated circuit manufacturer.

At least three phases may be distinguished in the operation of the manufactured integrated circuit 100: a testing phase, a personalization phase and a usage phase. The testing phase comes after manufacture of the integrated circuit. The usage phase comes after the testing phase. Between the testing phase and the usage phase the integrated circuit is personalized. During personalization the decryption key is loaded into empty part 162

During the test testing phase, processing unit 150 executes code stored in test memory 140. If the code in test memory 140 is encrypted the code is decrypted by decryption module 120. For example, via processing unit connection 155 processing unit 150 sends a request for a data item comprising a plain address to decryption module 120. If address encryption is used, then decryption module 120 encrypts the plain address to an encrypted address. The data item stored at the plain or encrypted address is returned to decryption module 120. If data decryption is used decryption module 120 decrypts the data. Address and data decryption may use the same or a different key, or different parts of the same key. If no encryption/ decryption is used for test code stored in test memory 140 then processing unit 150 may be connected to test memory 140 without going via decryption module 120.

Data memory 130 may comprise a test pattern. The test pattern may be a random but fixed sequence of one and zero bits. The test pattern may comprise a sequence of all zero bits or all one bits, to test a tendency of memory data memory 130 to get stuck in one or zero bits respectively. The test pattern can be self testing. For example, a first part of the test pattern may comprise a checksum, e.g., of a second part of the test pattern. For the checksum, e.g., CRC32 or SHA-1 can be used. In the latter example, the first part may be 160 bit, and the second part may say 80 bit. As and example, the test pattern, in particular the second part, may comprise all or part of the encrypted data block.

The test code stored in test memory 140 may instruct processing unit 150 to configure decryption module 120 such that no encryption is used in decryption module 120. Using the override mode the test pattern can be read from data memory 130 and tested. For example, the test pattern may be compared with a same pattern stored in test memory 140. If a self testing pattern is used, the self test may execute. For example, the checksum over the second part may be computed and compared with the checksum stored in the first part.

If processing unit 150 concludes that data memory 130 is faulty a signal may be produced to signal this to an external computing device, e.g., a server.

During the usage phase processing unit 150 uses the data stored in data memory 130. In particular, processing unit 150 may execute code stored in data memory 130 and/or use cryptographic keys stored in data memory 130. For example, via processing unit connection 155 processing unit 150 sends a request for a data item comprising a plain address to decryption module 120. If address encryption is used, then decryption module 120 encrypts the plain address to an encrypted address. The data item stored at the plain or encrypted address in data memory 130 is returned to decryption module 120. If data decryption is used decryption module 120 decrypts the data. Address and data decryption may use the same or a different key, or different parts of the same key. At least one of address encryption and data decryption is used.

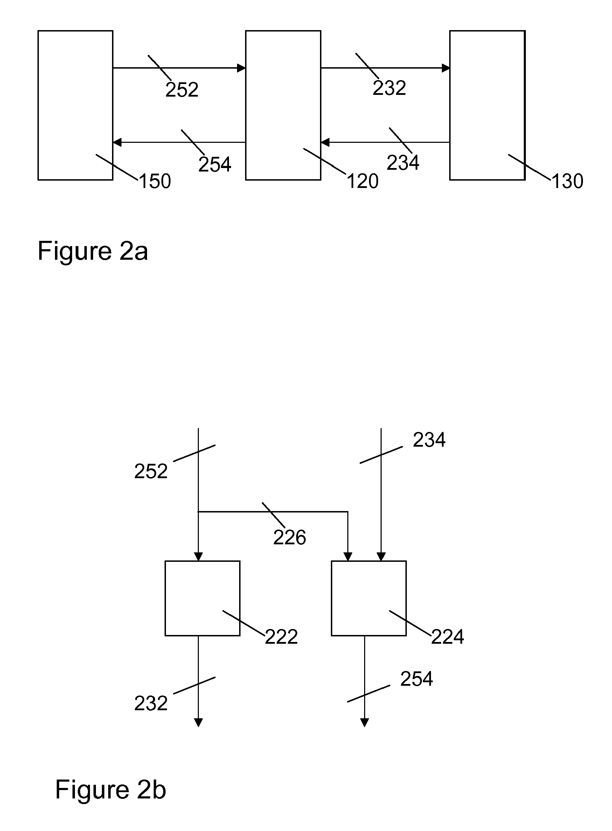

Figure 2 illustrates in more detail how the communication between processing unit 150 and data memory 130 may work.

Processing unit 150 requests a data item over plain address connection 252 to decryption module 120. The request comprises a plain address. Decryption module 120 encrypts the address and sends a request to data memory 130 comprising the encrypted address over encrypted address connection 232. An encrypted data item which is stored at the encrypted address is returned to decryption module 120 over encrypted data connection 234. Decryption module 120 decrypts the encrypted data item and sends it to processing unit 150 over plain data connection 254. Note that processing unit 150 does not need to take into account that data memory 130 is encrypted. The encryption may be transparent. If no address or data encryption is used then the corresponding part of the operation can be omitted, the plain address or data can be forwarded by processing unit 150. In particular, if decryption module 120 is configured in an override mode, then decryption module 120 may simply forward the addresses and data items between processing unit 150 and data memory 130.

Processing unit connection 155 may comprise plain address connection 252 and plain data connection 254. Data memory connection 135 may comprises encrypted address connection 232 and encrypted data connection 234. Test memory 140 and connection 145 may use the same mechanism as data memory 130.

Figure 2b illustrates how decryption module 120 may operate. Decryption module 120 may comprise an address encryptor 222 and/or a data decryptor 224. A difference between address encryption and data encryption is that for addresses during use the same algorithm should be used as during the original encryption of the memory, whereas for data an inverse algorithm should be used (decryption instead of encryption). For simplicity, an algorithm may be chosen having the same encryption key as decryption key, e.g., AES.

A plain address arrives over plain address connection 252 in address encryptor 222. Address encryptor 222 may be a block cipher encrypting the address and forwarding it to encrypted address connection 232. The data item then arrives over encrypted data connection 234 in data decryptor 224. Data decryptor 224 may be a block cipher decrypting the data item and forwarding it to plain data connection 254. Optionally, data decryptor 224 may depend also on the address. For example, the address may be forwarded to data decryptor 224 via an optional additional address connection 226 from plain address connection 252 to data decryptor 224. For example, data decryptor 224 may XOR the address and the data item before or after applying the block cipher of data decryptor 224. For example, data decryptor 224 may XOR the address with the decryption key used in data decryptor 224.

Note that both address encryptor 222 and data decryptor 224 can use the key stored in empty part 162, once this key has been received and stored.

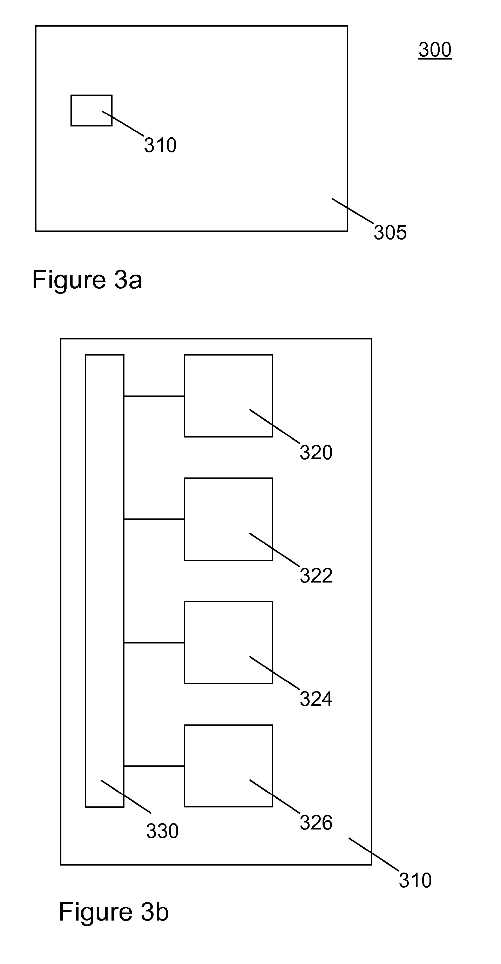

Figure 3a shows in top-view a schematic representation of a smart card 300 according to the invention. The smart card comprises an integrated circuit 310 and a, typically plastic, supporting card 305 supporting integrated circuit 310. The architecture of integrated circuit 310 is schematically shown in Figure 3b. Circuit 310 comprises a processing unit 320, e.g. a CPU, for running computer program components, including those stored in encrypted form. Circuit 310 comprises a memory 322 for storing programming code, data, cryptographic keys, etc, some of which is stored in encrypted form. Part of memory 322 may be read-only. Circuit 310 comprises a decryption module 324 wherein a key storage has been integrated. Circuit 310 may comprise a communication element 326, e.g., an antenna, connector pads or both. Processing unit 320, memory 322, decryption module 324 and communication element 326 may be connected to each other via a bus 330. The card may be arranged for contact and/or contact-less communication, using an antenna and/or connector pads respectively. The smart card may be used, e.g., in a set-top box to control access to content, in a mobile phone to control access to a telecommunication network, in a public transport system to control access to public transport, in a banking card to control access to a bank account, etc.

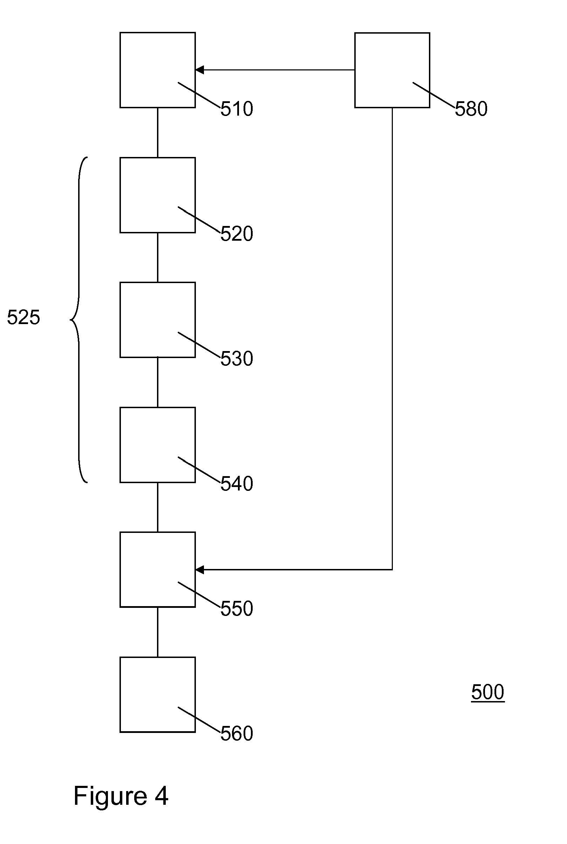

Figure 4 illustrates as a flow chart a method according to the invention. The method may be used to process an integrated circuit such as described in Figure 1, 2a, 2b, 3a and 3b. The figure includes, in simplified form, the submission of a card operating system and photo mask creation. The method is explained for smart cards but is also applicable more generally for integrated circuits. Not all embodiments of a method according to the invention need to perform all of the steps mentioned below.

The method may be used as a ROM-code encryption procedure for ROM masked ICs and accordingly securing the confidentiality of executable ROM-code.

A smart card, also known as chip card, integrated circuit card (ICC), or microprocessor card, is a pocket-sized card with embedded integrated circuits which can process information. Microprocessor cards may contain volatile memory and microprocessor components. Preferably, the card contains a security system with tamper-resistant properties. For example, a secure crypto-processor or a secure file system may be provided. The smart card may be capable of providing security services, e.g. confidentiality of information in the memory. A smart card operating system (COS) enables a smart card to carry a variety of applications, from chip & pin application for payment to on-card biometric matching for secure ID and ePassport.

Due to economical reasons the COS is typically implemented as a mask-programmed ROM in the smart card IC. The mask-programmed ROM is then pre-wired at the design stage to contain the binary representation of the COS. Once the mask is used to manufacture the integrated circuits, the data is fixed and cannot be altered. The mask ROM is therefore useful for read-only memories, e.g., containing the COS code of smart cards. In today's smart card systems the secrecy of the COS is considered very important.

The IC manufacturer and the source of the data block, e.g., a COS vendor may agree on a cryptographic algorithm to encrypt/decrypt the COS. For example, the parties may agree on some known and trusted cryptographic algorithm.

The COS may be encrypted within a secure environment, e.g., inside the premises of the COS vendor. And after manufacturing of the IC, the secret key which is required to decrypt the COS during a usage phase of the card may also be injected into the smart card IC within a secure environment, e.g., inside the premises of the COS vendor.

In flow chart element 580 a key is produced and in 510 a ROM code is encrypted using that key. The ROM code is obtained from a different party than the integrated circuit manufacturer, e.g., a COS vendor. The encrypting takes place, e.g., at the premises from the same party who produced the ROM code.

In the following, one particular way to manufacture an integrated circuit is described in detail. This description is only for explanatory purposes, variations are possible.

In flowchart element 520, the layout data creation is done. The IC manufacturer converts the encrypted ROM image into a GDSII binary file, or some other binary design format. The GDSII file will be transmitted to the mask centre. In flowchart element 530, the mask centre creates the photo mask which is used for IC manufacture. The photo mask will be transmitted to the semiconductor fabrication plant, also known as a 'fab' or an IC foundry. The fab is a factory where devices such as integrated circuits are manufactured. In flowchart element 540, the fab manufactures the integrated circuit using the photo mask.

GDS II is a binary file format representing planar geometric shapes, text labels, and some other information - in hierarchical form. GDS II files are the final output product of the IC design cycle, and are given to IC foundries for IC fabrication. Use of GDS II is preferred but not necessary.

Flowchart elements 520, 530 and 540, indicted with brace 525, are typically within the domain of the IC manufacture. Note that none of these steps need access to the unencrypted COS or to the key used for encrypting it.

In flowchart element 550, the COS vendor is receiving the produced and tested ICs. During personalization phase the COS vendor injects a decryption key corresponding to the encryption key produced in element 580 into the smart card IC to enable correct ROM code execution. Note that for most symmetric encryption decryption algorithms then encryption and decryption keys will be equal. If the keys are not equal they are typically produced together. At the end of the personalization and the IC can be put into the next life cycle state, that is, the usage phase. In this step the test OS may be disabled, e.g., by blowing a fuse. This process is preferably a non-reversible step.

In flow chart element 560 the final personalized product is issued, e.g., to a user.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method of producing an integrated circuit (100) comprising
- receiving a data block,
- manufacturing the integrated circuit, the manufactured integrated circuit comprising a memory (130, 322) storing the data block,
wherein
- the received data block is an encrypted data block,
- the integrated circuit comprises an interface (175) configured for receiving a decryption key, and
- a key storage (160) configured for storing the decryption key in an empty storage part (162) of the key storage, and
- a decryption module (120, 324) configured for decrypting at least part of the encrypted data block stored in the manufactured memory using the decryption key once the decryption key has been stored in the key storage.

2. A method as in Claim 1, wherein manufacturing the integrated circuit comprises obtaining a photo mask representing the integrated circuit, the manufacturing using the photo mask to manufacture the integrated circuit.

3. A method as in Claim 2, wherein obtaining a photo mask representing the integrated circuit comprises obtaining a binary design format representing using planar geometric shapes the integrated circuit, the obtaining of the photo mask using the binary design format to obtain the photo mask.

4. A method as in Claim 3, wherein obtaining the binary design format comprises
- obtaining a first binary design format representing the memory storing the encrypted data block,
- obtaining a second binary design format representing the key storage and the decryption module.

5. A method as in any one of the preceding claims, wherein the encrypted data block comprises multiple encrypted data items, the decryption module comprises a data decryptor (224) configured for decrypting an encrypted data item.

6. A method as in any one of the preceding claims, wherein the encrypted data block comprises multiple data items associated with respective encrypted addresses, the memory being arranged to store the data items at the encrypted addresses, the decryption module comprising an
- an address encryptor (222) for encrypting a plain memory address to obtain an encrypted address.

7. A method as in Claim 5 and 6, wherein the integrated circuit comprises a bus (330) for receiving in the memory requests for a data item from a plain address, wherein the address encryptor is arranged for encrypting the plain memory address to obtain the encrypted address, and wherein the data decryptor is arranged to decrypt the encrypted data item stored in the memory at the encrypted address.

8. A method as in any one of the preceding claims, wherein the encrypted data block comprises encrypted executable code and wherein the integrated circuit comprises a processing unit (150, 320) for executing at least part of the executable code.

9. A method as in Claim 5 and any one of the preceding claims, wherein the data decryptor comprises an override mode wherein the data decryptor is configured to suppress the decrypting of data items allowing access to the encrypted data block in the manufactured memory.

10. A method as in Claim 6 and any one of the preceding claims, wherein the address encryptor comprises an override mode wherein the address encryptor is configured to suppress the encrypting of plain memory addresses allowing access to the manufactured memory using plain memory addresses.

11. A method as in 9 or 10, comprising a test memory (140, 322) comprising executable code for testing the integrated circuit, at least part of the test code being configured to configure the address encryptor and/or data decryptor into override mode.

12. A method as in claim 11, wherein the memory stores a predetermined test pattern, testing the integrated circuit comprises reading the stored test pattern from the memory in override mode and verifying the correctness of the test pattern.

13. A method as in as in Claim 11 or 12 wherein the executable code stored in the test memory is stored in encrypted form, and wherein the decryption module is further configured for decrypting at least part of executable code stored in the test memory.

14. A method as in any one of the preceding claims, wherein the memory is a read only memory.

15. A method as in any one of the preceding claims, further comprising loading the decryption key into the empty part of the key storage, the loading of the decryption key coming after the manufacturing.

16. An integrated circuit comprising
- a read-only-memory (130) storing a data block,
wherein
- the data block is an encrypted data block,
- the integrated circuit comprises
- an interface (175) configured for receiving a decryption key
- a key storage (160) configured storing the decryption key in an empty storage part of the key storage, and
- a decryption module (120) configured for decrypting at least part of the encrypted data block stored in the manufactured memory using the decryption key once the decryption key has been stored in the key storage.

17. An integrated circuit as in claim 16 and/or as manufactured by any one of claims 1 to 15 comprised in a smart card (300) or an RFID tag.
